# EUROPEAN PATENT APPLICATION

(11) **EP 4 557 861 A1**
(43) Date of publication of application: **21.05.2025**
(21) Application number: 22951122.5
(22) Date of filing: 13.07.2022
(51) Int. Cl.: H04W 72/0457, H04W 52/04, H04W 72/0453

(54) **TERMINAL, BASE STATION, AND COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2022/027623
(87) International publication number: WO 2024/013908

(57) **Abstract**

This terminal includes: a reception unit that receives a downlink control signal relating to power saving in a base station; and a control unit that switches a secondary cell to a primary cell on the basis of the downlink control signal.

## Description

### Technical Field

The present disclosure relates to a terminal, a base station, and a communication method.

### Background Art

The 3rd Generation Partnership Project (3GPP) has specified the 5th generation mobile communication system (also referred to as 5G, New Radio (NR), or Next Generation (NG)), and has been further working on the specification of the next generation called Beyond 5G, 5G Evolution, or 6G.

In 5G, studies have been carried out on technologies realizing increased system capacity, a high data transmission rate, low latency, simultaneous connection of a large number of terminals, low cost, power savings, and the like (e.g., Non-Patent Literature (hereinafter, referred to as NPL) 1).

Further, in Release 18 of 3GPP, a reduction in the power consumption of the base station has been studied (e.g., NPL 2). The details are subject to study in the future.

### Citation List

### Non-Patent Literature

NPL 1
   3GPP TS 38.300 V17.0.0 (2022-03)
NPL 2
   "New SI: Study on network energy savings for NR" in RP-213 554, 3GPP TSG RAN Meeting #94e, 3GPP, December, 2021

### Summary of Invention

As described above, the power savings of the base station is a study matter, but has not been thoroughly studied on how the control and the like related to the power savings is specifically performed.

An aspect of the present disclosure is to provide a terminal, a base station, and a communication method each capable of saving power of a base station.

### Solution to Problem

A terminal according to an embodiment of the present disclosure includes: a reception section that receives a downlink control signal related to energy savings of a base station; and a control section that switches a secondary cell to a primary cell based on the downlink control signal.

A base station according to an embodiment of the present disclosure includes: a control section that determines a secondary cell to be switched to a primary cell; and a transmission section that transmits information on the secondary cell using a downlink control signal related to energy savings of a base station.

In a communication method according to an embodiment of the present disclosure, a terminal receives a downlink control signal related to energy savings of a base station, and switches a secondary cell to a primary cell based on the downlink control signal.

In a communication method according to an embodiment of the present disclosure, a base station determines a secondary cell to be switched to a primary cell, and transmits information on the secondary cell using a downlink control signal related to energy savings of a base station.

### Brief Description of Drawings

FIG. 1 illustrates an exemplary radio communication system according to an embodiment;
FIG. 2A is a diagram for describing exemplary activation and deactivation by MAC CE;
FIG. 2B is another diagram for describing exemplary activation and deactivation by MAC CE;
FIG. 3A is a diagram for describing exemplary activation and deactivation by RRC;
FIG. 3B is another diagram for describing exemplary activation and deactivation by RRC;
FIG. 4A is a diagram for describing a parameter SCellIndex;
FIG. 4B is a diagram for describing a parameter ServCellIndex;
FIG. 5A is a diagram for describing SCell pausing indication;
FIG. 5B is another diagram for describing SCell pausing indication;
FIG. 6 is a diagram for describing exemplary cell deactivation of a base station;
FIG. 7 is a diagram for describing an exemplary operation of Proposal 1;
FIG. 8 is a diagram for describing an exemplary higher layer parameter;
FIG. 9A illustrates an exemplary RRC parameter;
FIG. 9B illustrates another exemplary RRC parameter;
FIG. 10 is a block diagram illustrating an exemplary configuration of a base station according to an embodiment;
FIG. 11 is a block diagram illustrating an exemplary configuration of a terminal according to an embodiment;
FIG. 12 illustrates an exemplary hardware configuration of the base station and the terminal according to the present embodiment; and
FIG. 13 illustrates an exemplary configuration of a vehicle.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

The existing technology may be appropriately used for an operation of a radio communication system according to an embodiment of the present disclosure. The existing technology includes but not limited to existing NR or LTE, for example. Further, the term used in this specification, "LTE," shall have a broad meaning including LTE-Advanced and a system after LTE-Advanced (e.g., NR), unless otherwise indicated.

Further, in the embodiment of the present disclosure, a duplex system may be a Time Division Duplex (TDD) system, a Frequency Division Duplex (FDD) system, or another system (e.g., Flexible Duplex or the like).

Further, in the embodiment of the present disclosure, the phrase that a radio parameter or the like is "configured" may refer to a predetermined value being "preconfigured" or a radio parameter that is indicated from a base station or a terminal being configured.

### <System Configuration>

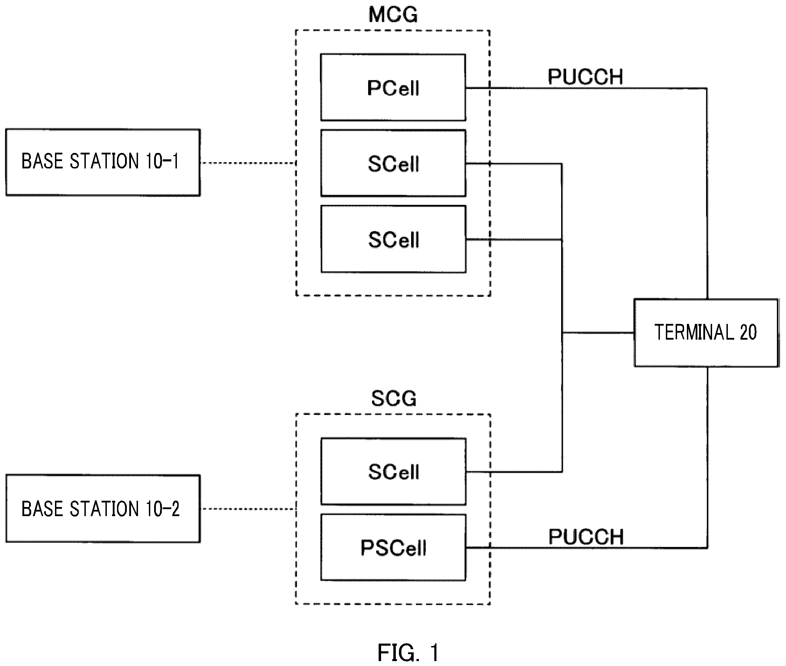

FIG. 1 illustrates an exemplary radio communication system according to an embodiment. In the example of FIG. 1, base station 10-1 may be a Master Node (MN), and base station 10-2 may be a Secondary Node (SN). As illustrated in the example of FIG. 1, in the Dual Connectivity (DC), carriers between different base stations may be bundled together.

In the example of FIG. 1, base station 10-1 communicates with terminal 20 through a primary cell (Pcell) and secondary cells (Scells). In the example of FIG. 1, terminal 20 has established an RRC connection with base station 10-1.

In the case of DC, a delay in communication between base stations 10-1 and 10-2 possibly occurs, which makes it difficult to indicate uplink control information (UCI) received in Pcell of base station 10-1 to base station 10-2 through a backhaul link (e.g., wired or wireless link connecting base station 10-1 and base station 10-2 together) and to reflect it in the scheduling of Scell under base station 10-2. Then, in the DC, in addition to the Pcell of base station 10-1, one carrier under base station 10-2 may be configured as a Primary Scell (PScell), and the PScell may support PUCCH transmission. In this case, terminal 20 transmits the UCI to base station 10-2 through the PScell.

In the example of FIG. 1, terminal 20 configures, in addition to the Pcell, Scells for base station 10-1. Further, terminal 20 configures, in addition to the PScell, an Scell for base station 10-2. Terminal 20 transmits the UCI of each carrier under base station 10-1 through PUCCH of the Pcell. Further, terminal 20 transmits the UCI of each carrier under base station 10-2 through PUCCH of the PScell. In the example of FIG. 1, a cell group (CG) under base station 10-1 may be referred to as a Master Cell-Group (MCG), and a cell group under base station 10-2 may be referred to as a Secondary Cell-Group (SCG).

In a case where the DC is performed, terminal 20 may transmit PUCCH through a Pcell, a PScell, and/or a PUCCH-Scell. Generally, it is not assumed that terminal 20 transmits PUCCH through an Scell other than the Pcell, the PScell, and the PUCCH-Scell.

### <SCell activation/deactivation >

In 3GPP, activation and deactivation of SCell are defined. For example, SCell is activated and deactivated by MAC CE and/or RRC. MAC CE is an abbreviation for Medium Access Control-Control Element. RRC is an abbreviation for Radio Resource Control.

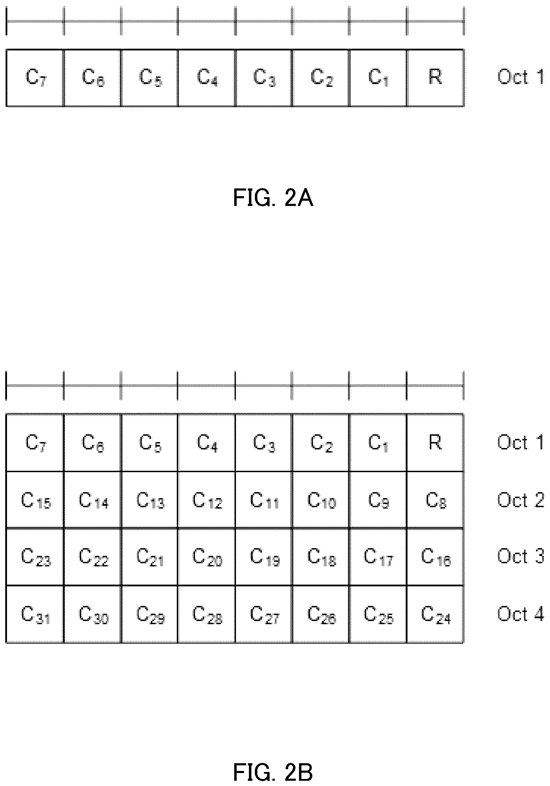

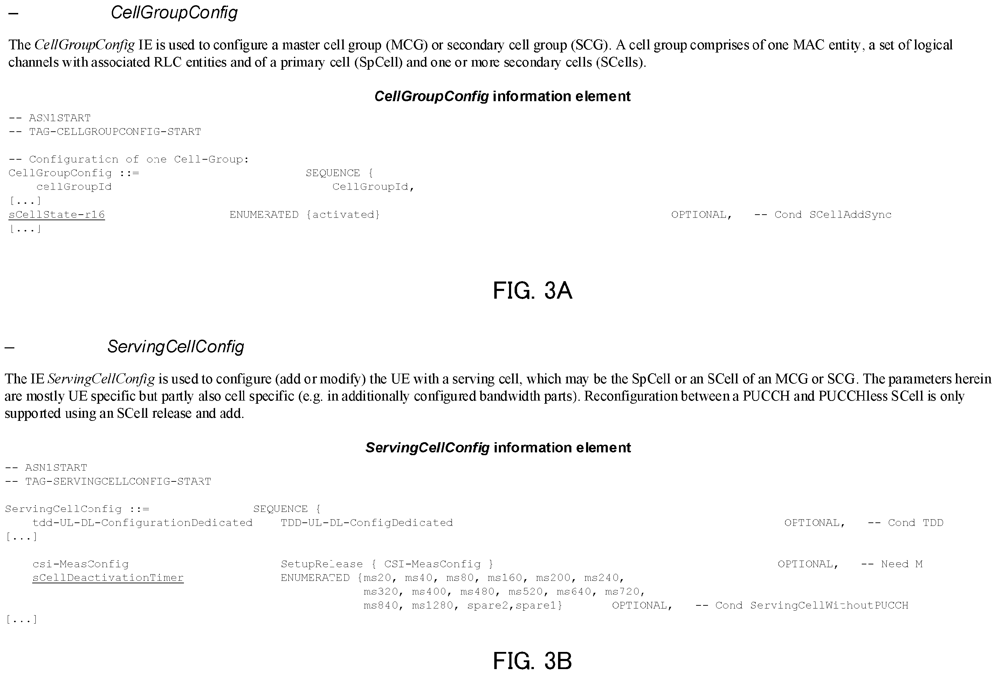

Hereinafter, activation and deactivation by MAC CE will be described with reference to FIGS. 2A and 2B. The activation and deactivation by RRC will be described with reference to FIGS. 3A and 3B.

### - Activation and deactivation by MAC CE

FIGS. 2A and 2B illustrate exemplary activation and deactivation by MAC CE. Fields of MAC CE are illustrated in FIGS. 2A and 2B (e.g., see 3GPP TS 38.321 V17.0.0, section 6.1.3.10). Cᵢ (i is a positive integer) shown in FIGS. 2A and 2B corresponds to an SCell index that identifies an SCell. Note that, as will be described below, the SCell index is configured by a parameter SCellIndex of higher layer signaling such as RRC.

For example, as illustrated in FIG. 2A, up to seven SCells are activated and deactivated by MAC CE. For example, the base station sets Cᵢ to "1" and activates the SCell with the SCell index corresponding to Cᵢ. For example, the base station sets Cᵢ to "0" and deactivates the SCell with the SCell index corresponding to Cᵢ. The terminal activates and deactivates SCell based on the indication (MAC CE) from the base station.

For example, as illustrated in FIGS. 2B, up to 31 SCells are activated and deactivated by MAC CE. For example, the base station sets Cᵢ to "1" and activates the SCell with the SCell index corresponding to Cᵢ. For example, the base station sets Cᵢ to "0" and deactivates the SCell with the SCell index corresponding to Cᵢ. The terminal activates and deactivates SCell based on an indication from the base station.

### - Activation and deactivation by RRC

FIGS. 3A and 3B illustrate exemplary activation and deactivation by RRC. Activation and deactivation of SCell is configured by a higher layer parameter such as RRC (see, e.g., 3GPP TS 38.331 V17.0.0, Section 6.3).

For example, as illustrated in FIG. 3A, the state of SCell is configured by a parameter sCellState. For example, when the parameter sCellState is configured as "activated," SCell is activated.

For example, as illustrated in FIG. 3B, a timer for deactivating SCell is set by a parameter sCellDeactivationTimer for each SCell. For example, SCell is deactivated when the timer configured by the parameter sCellDeactivationTimer expires.

### <Cell Index>

A cell index will be described. The terminal is configured with a Cell index identifying a cell by a higher layer parameter such as RRC. Example of the parameters for configuring the Cell index include, for example, a parameter SCellIndex and a parameter ServCellIndex (see, e.g., 3GPP TS 38.331 V17.0.0 Section 6.3).

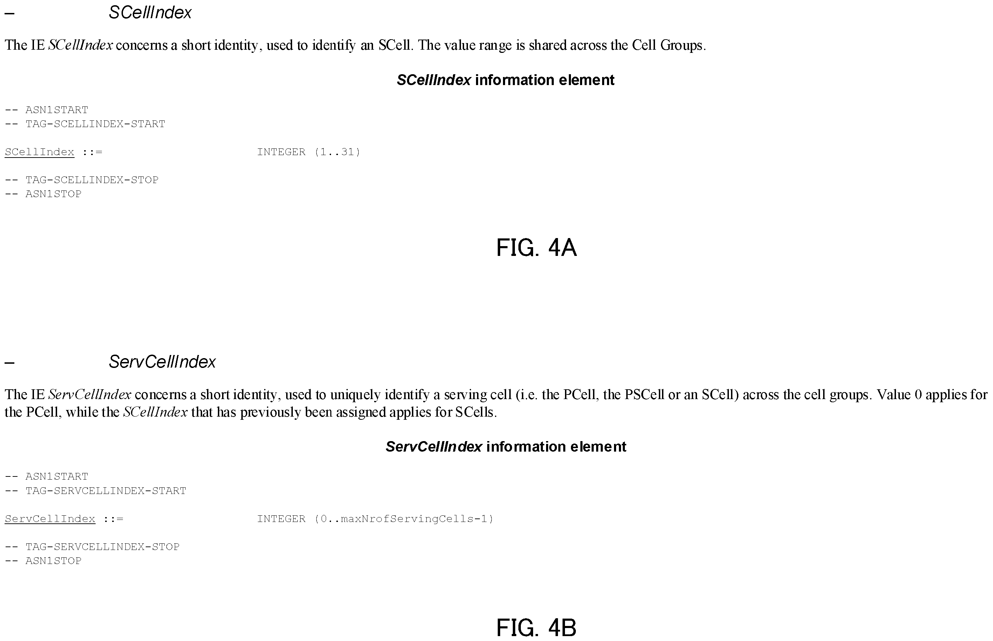

FIG. 4A illustrates an exemplary parameter SCellIndex. In a case where a plurality of SCells is configured, the SCells are managed (identified) by the parameter SCellIndex. For example, in a case where a plurality of SCells is configured for a terminal, the base station configures the parameters SCellIndex of 1 ... 31 so that the terminal identifies the plurality of SCells.

FIG. 4B illustrates an exemplary parameter ServCellIndex. The serving cell includes a PCell and a PSCell in addition to an SCell. The parameter ServCellIndex is used to uniquely identify serving cells including PCell, PSCell, or SCell. For example, the base station sets the parameters ServCellIndex of 0 ... n (n is the serving cell-1) in order for the terminal to identify the serving cells.

Note that the parameter ServCellIndex "0" is applied to PCell. In other words, the cell with the parameter ServCellIndex "0" is a PCell.

Further, the parameter ServCellIndex "1...n" is applied to SCell. The one or more parameters ServCellIndex correspond to the parameters SCellIndex described in FIG. 4A. For example, the SCell with the parameter ServCellIndex "1" and the SCell with the parameter SCellIndex "1" indicate the same SCell.

### <SCell dormancy indication>

In 3GPP, an SCell dormancy indication is defined. For example, the base station indicates, to the terminal, dormancy and non-dormancy of SCell by using a lower layer signaling parameter such as DCI. DCI is an abbreviation for Downlink Control Information.

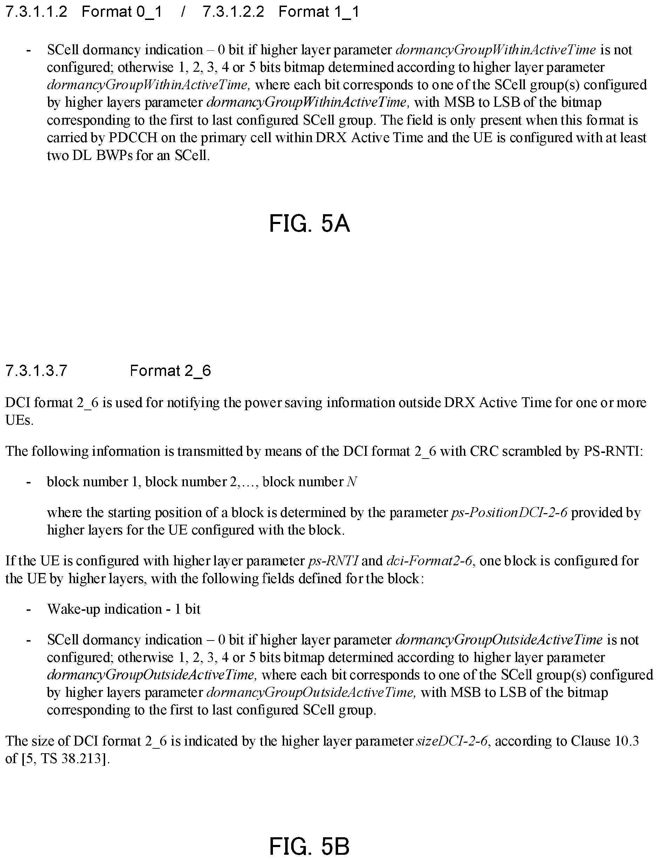

For example, as shown in FIGS. 5A and 5B, DCI format 0_1, 1_1, or 2_6 is used for SCell dormancy indication. In DCI, 0, 1, 2, 3, 4, or 5 bits field is configured to specify SCell for dormancy.

In a case where the terminal is indicated the dormancy of SCell, for example, the terminal does not monitor PDCCH, but performs processing such as CSI measurement, AGC of reception power, and beam management.

Also, in a case where SCell is deactivated, the terminal does not perform PDCCH monitoring and CSI measurement, for example. Also, in a case where SCell is deactivated, the terminal performs relaxed RRM measurement, for example.

Note that PDCCH is an abbreviation for a Physical Downlink Control Channel. CSI is an abbreviation for Channel State Information. AGC is an abbreviation for Auto Gain Control. RRM is an abbreviation for Radio Resource Management.

### <Power Savings of Base Station>

In order to achieve carbon neutral and SDGs, it is increasingly important to reduce power consumption by a base station (network). However, a technique for reducing power consumption by a base station has not been standardized in 3GPP. Note that SDGs is an abbreviation for Sustainable Development Goals.

### <Review>

As described in the above <Power Savings of Base Station>, the importance of Energy Savings (ES) in a base station is increasing. As a way to realize ES of a base station, for example, reduction in (deactivation of) cells of a base station is conceivable. The base station, for example, deactivates cells, thereby reducing the communication volume with a terminal and realizing ES.

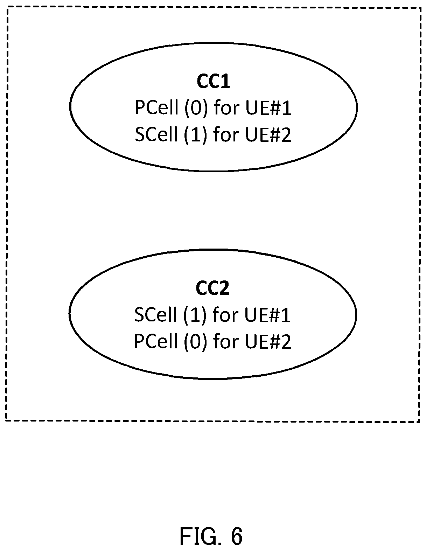

FIG. 6 illustrates exemplary cell deactivation of a base station. CC1 and CC2 shown in FIG. 6 refer to component carriers. CC1 and CC2 may be each regarded as a cell formed by the base station. Further, CC1 and CC2 may be each regarded as identification information of a cell as viewed from the base station. In FIG. 6, a terminal is referred to as a UE. UE is an abbreviation for User Equipment.

The numbers of "0" and "1" in parentheses shown in FIG. 6 indicate Cell indexes configured for the terminals by RRC. The Cell index is, for example, the parameter ServCellIndex described in the above <Cell Index>. As described above, the parameter ServCellIndex "0" is used for identifying a PCell, and a value other than "0" is used for identifying an SCell.

The Cell index is configured for each terminal. For example, in FIG. 6, the base station configures the Cell index "0" for UE#1 in CC1. The base station configures the Cell index "1" for UE#2 in CC1. That is, in CC1, the base station configures a PCell for UE#1 and an SCell for UE#2.

For example, in FIG. 6, the base station configures the Cell index "1" for UE#1 in CC2. The base station configures the Cell index "0" for UE#2 in CC2. That is, in CC2, the base station configures an SCell for UE#1 and a PCell for UE#2.

Here, in order to realize ES in the base station, for example, it is conceivable to deactivate one of CC1 and CC2 illustrated in FIG. 6.

However, because the Cell index is configured for each terminal, PCells may be configured in different CCs as illustrated in FIG. 6. Therefore, as described in the above <SCell activation/deactivation>, even though an Scell is deactivated in one CC, the (entire) CC cannot be deactivated when a PCell is configured in the same CC.

For example, in FIG. 6, even though the Scell of UE#1 is deactivated to deactivate CC2, the (entire) CC2 cannot be deactivated because the Pcell of UE#2 is configured. Therefore, the base station may not be capable of realizing adequate ES.

Then, as a technique for realizing ES of the base station, the following technique is proposed.

### <Proposal 1>

Pcells configured in different CCs are switched (aggregated) to one CC. For example, a base station aggregates PCells configured in different CCs into one CC.

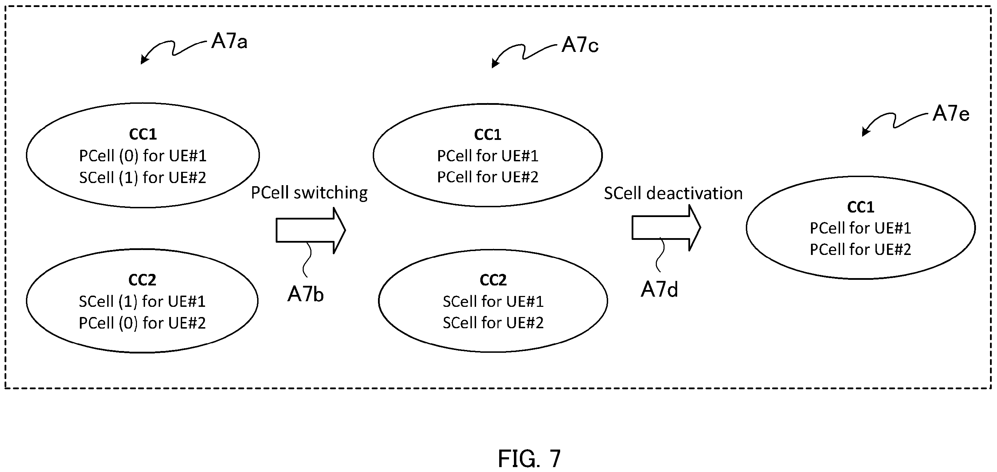

FIG. 7 illustrates an exemplary operation of Proposal 1. As indicated by arrow A7a in FIG. 7, for example, the base station configures Cell index "0" for UE#1 in CC1. For example, the base station configures Cell index "1" for UE#2 in CC1. That is, in CC1, the base station configures a PCell for UE#1 and an SCell for UE#2.

Further, as indicated by arrow A7a in FIG. 7, for example, the base station configures Cell index "1" for UE#1 in CC2. For example, the base station configures Cell index "0" for UE#2 in CC2. That is, in CC2, the base station configures an SCell for UE#1 and a PCell for UE#2.

Here, for example, the base station performs PCell switching as indicated by arrow A 7b in FIG. 7 in response to an ES request from the core network or a trigger such as communication volume with the terminal. For example, the base station performs PCell switching by RRC reconfiguration or by dynamic PCell switching of <Proposal 2> described below.

More specifically, the base station changes Cell index "1" of UE#2 in CC1 to Cell index "0" by RRC reconfiguration or dynamical PCell switching. The base station changes Cell index "0" of UE#2 in CC2 to Cell index "1" by RRC reconfiguration or dynamical PCell switching. This operation aggregates PCells configured in different CCs of CC1 and CC2 into one CC of CC1 as indicated by arrow A7c of FIG. 7, for example.

After aggregating PCells of the terminals into one CC, the base station deactivates all or some of the CCs in which PCells are not aggregated. In other words, the base station deactivates all or some of the CCs including only SCell.

For example, the base station deactivates all or some of the CCs in which PCells are not aggregated, by RRC and/or MAC-CE described in the above <SCell activation/deactivation> or by Dynamical Cell deactivation of <Proposal 3> described below. More specifically, the base station deactivates CC2 including only SCells, as indicated by arrows A7d and A7e in FIG. 7.

### <Summary of Proposal 1>

As described above, the base station aggregates PCells configured in different CCs into one CC. By this operation, the base station can deactivate the CC in which PCells are not aggregated and which includes SCells, thereby reducing the number of CCs and realizing ES.

Further, since PCell is maintained and all or some of SCells are deactivated, the terminal can realize ES while maintaining communication with the base station.

### <Proposal 2>

The PCell switching described in the above <Proposal 1> may be performed by RRC reconfiguration as described in <Proposal 1>.

However, signaling overhead based on RRC reconfiguration occurs when PCell switching of a plurality of terminals is performed by RRC reconfiguration. In addition, processing time for PCell switching is long, and it takes time for PCell switching to be completed.

Thus, in Proposal 2, dynamical PCell switching is proposed for PCell switching.

PCell is switched by lower layer signalling such as DCI. For example, the base station switches PCell of the terminal using DCI. The terminal switches PCell based on DCI from the base station.

In <Proposal 2>, the following Options 1 and 2 are proposed.

### <Proposal 2 - Option 1>

PCell is switched by terminal-specific DCI (UE-specific DCI). In other words, the base station switches PCell of the terminal for each terminal using terminal-specific DCI.

An RNTI may be an RNTI for a terminal-specific DCI format, such as a C-RNTI or MCS-C-RNTI, for example. Alternatively, a new terminal-specific RNTI such as an ES-RNTI may be introduced (defined). Note that RNTI is an abbreviation for a Radio Network Temporary Identifier. C-RNTI is an abbreviation for a Cell-RNTI. MCS-C-RNTI is an abbreviation for a Modulation Coding Scheme-C-RNTI.

A DCI format may be, for example, DCI format 0_1/0_2/1_1/1_2. Alternatively, a new format may be introduced as a DCI format, for example.

In DCI for PCell switching, a new field may be introduced (Proposal 2-Option 1a), or an existing field may be used (Proposal 2-Option 1b).

### <Proposal 2 - Option 1a>

In a case where a new field is introduced in DCI for PCell switching, the following alts.1 and 2 are proposed.

### <Proposal 2 - Option 1a - alt. 1>

A target cell ID indicator field is introduced in DCI for PCell switching. In the target cell ID indicator field, the cell ID of the SCell to be changed to a PCell is indicated. The cell ID of the SCell to be changed to a PCell is an ID associated with a parameter ServCellIndex or a parameter SCellIndex, and a parameter ServCellIndex or a parameter SCellIndex may be used. Hereinafter, the cell ID of the SCell to be changed to a PCell is sometimes referred to as a target cell ID.

The base station indicates a target cell ID to a terminal using the target cell ID indicator field. The terminal switches the SCell to a PCell based on the value of the target cell ID indicator field, that is, the target cell ID.

For example, the base station indicates the target cell ID "1" to UE#2 in CC1 indicated by arrow A7a of FIG. 7 (SCell for UE#2 in CC1), using the target cell ID indicator field. UE#2 indicated the target cell ID "1" changes the parameter ServCellIndex "1" of RRC corresponding to the target cell ID "1" to the parameter ServCellIndex "0," and switches the SCell in CC1 to a PCell. Further, for example, the terminal changes the parameter ServCellIndex "0," by which the PCell has been configured, to the parameter ServCellIndex "1" based on the target cell ID "1," and switches the PCell in CC2 to an SCell.

The bit width of the target cell ID indicator field may be any of 0, 1, 2, 3, 4, or 5 bits.

For example, the bit width of the target cell ID indicator field may be 0 in a case where a higher layer parameter is not configured. The higher layer parameter is a parameter indicating the presence or absence of the target cell ID indicator field, and may be referred to as PcellDynamicSwitch.

In a case where the higher layer parameter is configured, the bit width of the target cell ID indicator field may be any one of 1, 2, 3, 4, and 5 bits based on the number of SCells configured for the terminal. For example, in a case where twelve SCells are configured for the terminal, the bit width of the target cell ID indicator field may be four bits.

### <Proposal 2 - Option 1a - alt.2>

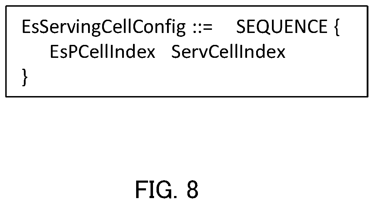

An NW ES indicator field is introduced in DCI for PCell switching. NW is an abbreviation for Network. In the NW ES indicator field, switching from an SCell to a PCell is indicated. The terminal indicated switching from an SCell to a PCell by the NW ES indicator field switches the SCell indicated by a "parameter EsPCellIndex" illustrated in FIG. 8 to a PCell.

In a case where an NW ES indicator field is introduced in DCI for PCell switching, a cell ID of the SCell to be changed to a PCell (target cell ID) is indicated by higher layer signaling such as RRC.

FIG. 8 illustrates an exemplary higher layer parameter. The target cell ID is indicated from a base station to a terminal by a parameter EsPCellIndex illustrated in FIG. 8, for example. For example, in the parameter EsPCellIndex, the cell ID ("ServCellIndex" shown in FIG. 8) of the SCell to be changed to a PCell is substituted.

As described above, when switching from an SCell to a PCell is indicated by the NW ES indicator field, the terminal switches the SCell indicated by the parameter EsPCellIndex to a PCell.

For example, it is assumed that "1" is configured in the parameter EsPCellIndex illustrated in FIG. 8 (ServCellIndex = 1). Here, for example, the base station indicates switching from an SCell to a PCell to UE#2 in CC1 indicated by arrow A7a in FIG. 7, using an NW ES indicator field. UE#2 indicated the switching changes the parameter ServCellIndex "1" of RRC corresponding to the parameter EsPCellIndex "1" to the parameter ServCellIndex "0", and changes the SCell in CC1 to a PCell.

The bit width of the NW ES indicator field may be 0 or 1 bit.

For example, the bit width of the NW ES indicator field may be 0 in a case where a higher layer parameter is not configured. The higher layer parameter may be a parameter EsPCellIndex.

In a case where a higher layer parameter is configured, the bit width of the NW ES indicator field may be one bit.

For example, in a case where "1" is configured in the 1-bit NW ES indicator field, the terminal switches the SCell indicated by the parameter EsPCellIndex illustrated in FIG. 8 to a PCell. For example, in a case where "0" is configured in the 1-bit NW ES indicator field, the terminal does not perform PCell switching.

### <Proposal 2 - Option 1b>

A target cell ID is indicated using the existing field of DCI. For example, a target cell ID is indicated using the field of 1, 2, 3, 4, or 5 bits for specifying an SCell to be dormant as described in <SCell dormancy indication> above.

In a case where the target cell ID is indicated using the existing field of DCI, whether the existing field is used for indicating a target cell ID or for indicating the cell ID of an SCell to be dormant is distinguished by an RNTI.

For example, in a case where the DCI format is scrambled using a C-RNTI or MCS-C-RNTI, the field is used to indicate the cell ID of an SCell to be dormant. For example, in a case where the DCI format is scrambled using an ES-RNTI, the field is used to indicate a target cell ID.

### <Proposal 2 - Option 2>

A PCell is switched by group common DCI. In other words, the base station switches PCells of terminals in a group unit using group common DCI.

An RNTI may be the existing RNTI for group common DCI format, or a new RNTI for group common DCI format may be introduced. For example, the RNTI may be the existing PS-RNTI or may be a newly introduced ES-RNTI. PS-RNTI is an abbreviation for a Power Saving-RNTI.

A DCI format may be, for example, DCI format 2_6. Alternatively, a new format may be introduced as a DCI format, for example.

In group common DCI for PCell switching, a new field may be introduced (Proposal 2 - Option 2a), or an existing field may be used (Proposal 2 - Option 2b).

### <Proposal 2 - Option 2a>

In a case where a new field is introduced in group common DCI for PCell switching, the following alts.1 and 2 are proposed.

### <Proposal 2 - Option 2a - alt. 1>

A target cell ID indicator field is introduced in group common DCI for PCell switching. In the target cell ID indicator field, a target cell ID is indicated. The target cell ID is an ID associated with a parameter ServCellIndex or a parameter SCellIndex, and a parameter ServCellIndex or a parameter SCellIndex may be used.

The base station switches an SCell to a PCell for a plurality of terminals (group terminals) using the target cell ID indicator field. The plurality of terminals switches an SCell to a PCell based on the value of the target cell ID indicator field, that is, a target cell ID.

The bit width of the target cell ID indicator field may be any of 0, 1, 2, 3, 4, or 5 bits.

For example, the bit width of the target cell ID indicator field may be 0 in a case where a higher layer parameter is not configured. The higher layer parameter is a parameter indicating the presence or absence of the target cell ID indicator field, and may be referred to as PcellDynamicSwitch.

In a case where the higher layer parameter is configured, the bit width of the target cell ID indicator field may be any one of 1, 2, 3, 4, and 5 bits based on the numbers of SCells configured for the plurality of terminals. For example, in a case where twelve SCells are configured for the terminals, the bit width of the target cell ID indicator field may be four bits.

### <Proposal 2 - Option 2a - alt.2>

An NW ES indicator field is introduced in group common DCI for PCell switching. In the NW ES indicator field, switching from an SCell to a PCell is indicated. A plurality of terminals indicated switching from an SCell to a PCell by the NW ES indicator field switches the SCell indicated by the "parameter EsPCellIndex" described in FIG. 8 to a PCell.

The bit width of the NW ES indicator field may be 0 or 1 bit.

For example, the bit width of the NW ES field may be 0 in a case where a higher layer parameter is not configured. The higher layer parameter may be a parameter EsPCellIndex.

In a case where a higher layer parameter is configured, the bit width of the NW ES indicator field may be one bit.

For example, in a case where "1" is configured in the 1-bit NW ES indicator field, a plurality of terminals switches the SCell indicated by the parameter EsPCellIndex to a PCell. For example, in a case where "0" is configured in the 1-bit NW ES indicator field, a plurality of terminals does not perform PCell switching.

### <Proposal 2 - Option 2b>

A target cell ID is indicated using the existing field of DCI. For example, a target cell ID is indicated using the field of 1, 2, 3, 4, or 5 bits for specifying an SCell to be dormant as described in <SCell dormancy indication> above.

In a case where the target cell ID is indicated using the existing field of DCI, whether the existing field is used for indicating the target cell ID or for indicating the cell ID of an SCell to be dormant is distinguished by an RNTI.

For example, in a case where the DCI format is scrambled using a C-RNTI or MCS-C-RNTI, the field is used to indicate the cell ID of an SCell to be dormant. For example, in a case where the DCI format is scrambled using an ES-RNTI, the field is used to indicate a target cell ID.

### <Terminal Operation in Proposal 2>

Hereinafter, an example of the terminal operation in <Proposal 2> will be described. The terminal indicated the dynamical PCell switching assumes the indicated cell as a PCell.

For example, the terminal assumes that the cell of the target cell ID indicated by the target cell ID indicator field described in the above <Proposal 2 - Option 1a - alt.1> and <Proposal 2 - Option 2a - alt. 1> is a PCell.

For example, when PCell switching is indicated by the NW ES indicator field described in the above <Proposal 2 - Option 1a - alt.2> and <Proposal 2 - Option 2a - alt.2>, the terminal assumes that the cell of the target cell ID configured by the parameter EsPCellIndex illustrated in FIG. 8 is a PCell.

For example, the terminal assumes that the cell of the target cell ID indicated by the existing field described in the above <Proposal 2 - Option 1b> and <Proposal 2 - Option 2b> is a PCell.

When the terminal is indicated the dynamic PCell switching, the terminal assumes that the parameter associated with the parameter ServCellIndex "0" is associated with the parameter ServCellIndex "x." For example, x is a target cell ID indicated by the base station. For example, x takes a value of 1 to 31.

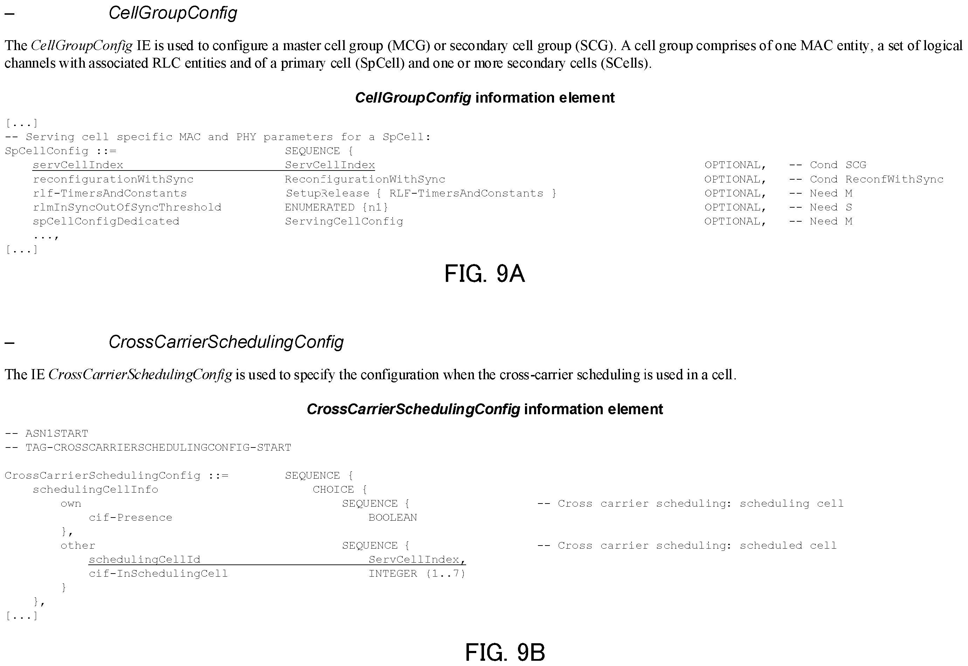

For example, the terminal changes (overwrites) the parameter ServCellIndex that has indicated "x" to "0." In other words, the terminal changes the parameter that has set to an SCell value (1 to 31) to a PCell value (0). For example, the terminal overwrites the parameter related to the parameter ServCellIndex, such as the parameter servCellIndex of SpCellConfig shown in FIG. 9A and the parameter schedulingCellId of CrossCarrierSchedulingConfig shown in FIG. 9B, to 0 (ServCellIndex = 0). This operation allows the terminal to switch an SCell to a PCell.

Further, for example, the terminal changes (overwrites) the parameter ServCellIndex that has indicated "0" to "x." In other words, the terminal changes the parameter that has set to a PCell value (0) to an SCell value (1 to 31). This operation allows the terminal to switch a PCell to an SCell. The terminal also shares the same parameter as the base station.

### <Summary of Proposal 2>

As described above, the base station controls PCell switching using a lower layer parameter such as DCI.

This operation allows the base station to reduce signaling overhead based on the RRC reconfiguration in PCell switching control, thereby suppressing the delay associated with the switching. In addition, the processing road is reduced, and the base station can realize ES.

In addition, design changes in the base station and the terminal can be suppressed in a case where the existing field of DCI is used for the PCell switching control.

### <Proposal 3>

The deactivation of an Scell described in the above <Proposal 1> may be executed by RRC and/or MAC CE as described in <Proposal 1>.

However, signaling overhead based on RRC and/or MAC CE occurs when the deactivation of an SCell is performed by RRC and/or MAC CE. In addition, processing time for deactivating SCell is long, and it takes time for SCell deactivation to be completed.

Therefore, in Proposal 3, dynamic Cell deactivation is proposed for deactivation of SCell. Note that the operation of Proposal 3 can also be applied to deactivation of PCell.

Either or both of an SCell and a PCell (hereinafter, referred to as SCell/PCell) are deactivated by a lower layer parameter such as DCI. For example, the base station deactivates SCell/PCell of the terminal using DCI. The terminal deactivates SCell/PCell based on DCI from the base station.

In <Proposal 3>, the following Options 1 and 2 are proposed.

### <Proposal 3 - Option 1>

SCell/PCell is deactivated by terminal-specific DCI (UE-specific DCI). In other words, the base station deactivates SCell/PCell of the terminal for each terminal using terminal-specific DCI.

An RNTI may be an RNTI for a terminal-specific DCI format, such as a C-RNTI or MCS-C-RNTI, for example. Alternatively, a new terminal-specific RNTI such as an ES-RNTI may be introduced.

A DCI format may be, for example, DCI format 0_1/0_2/1_1/1_2. Alternatively, a new format may be introduced as a DCI format, for example.

In DCI for deactivation of SCell/PCell, a new field may be introduced (Proposal 3 - Option 1a), or an existing field may be used (Proposal 3 - Option 1b).

### <Proposal 3 - Option 1a>

In a case where a new field is introduced in DCI for deactivation of SCell/PCell, the following alts.1 and 2 are proposed.

### <Proposal 3 - Option 1a - alt.1>

A target cell ID indicator field is introduced in DCI for deactivation of SCell/PCell. In the target cell ID indicator field, the cell ID of the SCell/PCell to be deactivated is indicated. The cell ID of the SCell/PCell to be deactivated is an ID associated with a parameter ServCellIndex or a parameter SCellIndex, and may be a parameter ServCellIndex or a parameter SCellIndex. In the following, the cell ID of the SCell/PCell to be deactivated may be referred to as a target cell ID.

The base station indicates a target cell ID to a terminal using the target cell ID indicator field. The terminal deactivates SCell/PCell based on the target cell ID indicator field, i.e., the target cell ID.

For example, the base station indicates the target cell ID "1" to each of UE#1 and UE#2 in CC2 indicated by arrow A7c of FIG. 7 (SCell for UE#1 and UE#2 in CC2), using the target cell ID indicator field. UE#1 and UE#2 to which the target cell ID "1" is indicated deactivate the SCells of the RRC parameter ServCellIndex "1" corresponding to the target cell ID "1." In this way, the base station deactivates SCell/PCell using DCI.

The bit width of the target cell ID indicator field may be any of 0, 1, 2, 3, 4, or 5 bits.

For example, the bit width of the target cell ID indicator field may be 0 in a case where a higher layer parameter is not configured. The higher layer parameter is a parameter indicating the presence or absence of the target cell ID indicator field, and may be referred to as ScellDynamicDeactivation.

In a case where the higher layer parameter is configured, the bit width of the target cell ID indicator field may be any one of 1, 2, 3, 4, and 5 bits based on the number of SCells configured for the terminal. For example, in a case where twelve SCells are configured for the terminal, the bit width of the target cell ID indicator field may be four bits.

### <Proposal 3 - Option 1a - alt.2>

A SCell deactivation indicator field is introduced in DCI for deactivation of SCell. In the SCell deactivation indicator field, deactivation of all SCells is indicated. The terminal to which the deactivation of all SCells is indicated by the SCell deactivation indicator field deactivates all SCells for the terminal.

The bit width of the SCell deactivation indicator field may be 0 or 1 bit.

For example, the bit width of the SCell deactivation indicator field may be 0 in a case where a higher layer parameter is not configured. The higher layer parameter is a parameter indicating the presence or absence of the SCell deactivation indicator field, and may be referred to as ScellDynamicDeactivation.

In a case where the higher layer parameter is configured, the bit width of the SCell deactivation indicator field may be one bit.

For example, in a case where "1" is configured in the 1-bit SCell deactivation indicator field, the terminal deactivates all SCells configured for the terminal. For example, in a case where "0" is configured in the 1-bit SCell deactivation indicator field, the terminal activates the SCell.

### <Proposal 3 - Option 1b>

A target cell ID is indicated using the existing field of DCI. For example, the target cell ID to be deactivated is indicated using the field of 1, 2, 3, 4, or 5 bits for specifying an SCell to be dormant as described in <SCell dormancy indication> above.

In a case where the target cell ID is indicated using the existing field of DCI, whether the existing field is used for indicating a target cell ID or for indicating the cell ID of an SCell to be dormant is distinguished by an RNTI.

For example, in a case where the DCI format is scrambled using a C-RNTI or MCS-C-RNTI, the field is used to indicate the cell ID of an SCell to be dormant. In a case where the DCI format is scrambled using an ES-RNTI, the field is used to indicate a target cell ID.

### <Proposal 3 - Option 2>

An SCell/PCell is deactivated by group common DCI. In other words, the base station deactivates SCells/PCells of terminals in a group unit using group common DCI.

An RNTI may be the existing RNTI for group common DCI format, or a new RNTI for group common DCI format may be introduced. For example, the RNTI may be the existing PS-RNTI or may be a newly introduced ES-RNTI.

A DCI format may be, for example, DCI format 2_6. Alternatively, a new format may be introduced as a DCI format, for example.

In group common DCI for deactivation of SCell/PCell, a new field may be introduced (Proposal 3 - Option 2a), or an existing field may be used (Proposal 3 - Option 2b).

### <Proposal 3 - Option 2a>

In a case where a new field is introduced in group common DCI for deactivation of SCell/PCell, the following alts.1 and 2 are proposed.

### <Proposal 3 - Option 2a - alt.1>

A target cell ID indicator field is introduced in group common DCI for deactivation of SCell/PCell. In the target cell ID indicator field, a target cell ID is indicated. The target cell ID is an ID associated with a parameter ServCellIndex or a parameter SCellIndex, and a parameter ServCellIndex or a parameter SCellIndex may be used.

The base station deactivates SCell/PCells for a plurality of terminals (grouping terminals) using the target cell ID indicator field. The plurality of terminals deactivate SCell/PCells based on the target cell ID indicator field, that is, a target cell ID.

The bit width of the target cell ID indicator field may be any of 0, 1, 2, 3, 4, or 5 bits.

For example, the bit width of the target cell ID indicator field may be 0 in a case where a higher layer parameter is not configured. The higher layer parameter is a parameter indicating the presence or absence of the target cell ID indicator field, and may be referred to as ScellDynamicDeactivation.

In a case where the higher layer parameter is configured, the bit width of the target cell ID indicator field may be any one of 1, 2, 3, 4, and 5 bits based on the numbers of SCells configured for the plurality of terminals. For example, in a case where twelve SCells are configured for the terminals, the bit width of the target cell ID indicator field may be four bits.

### <Proposal 3 - Option 2a - alt.2>

An SCell deactivation indicator field is introduced in group common DCI for deactivation of SCell. In the SCell deactivation indicator field, deactivation of all SCells is indicated. A plurality of terminals to which the deactivation of all SCells is indicated by the SCell deactivation indicator field deactivates all SCells for the terminals.

The bit width of the SCell deactivation indicator field may be 0 or 1 bit.

For example, the bit width of the SCell deactivation indicator field may be 0 in a case where a higher layer parameter is not configured. The higher layer parameter is a parameter indicating the presence or absence of the SCell deactivation indicator field, and may be referred to as ScellDynamicDeactivation.

In a case where the higher layer parameter is configured, the bit width of the SCell deactivation indicator field may be one bit.

For example, in a case where "1" is configured in the 1-bit SCell deactivation indicator field, the plurality of terminals deactivates all SCells. For example, in a case where "0" is configured in the 1-bit SCell deactivation indicator field, the plurality of terminals activates SCells.

### <Proposal 3 - Option 2b>

A target cell ID is indicated using the existing field of DCI. For example, the target cell ID to be deactivated is indicated using the field of 1, 2, 3, 4, or 5 bits for specifying an SCell to be dormant as described in <SCell dormancy indication> above.

In a case where the target cell ID is indicated using the existing field of DCI, whether the existing field is used for indicating a target cell ID or for indicating the cell ID of an SCell to be dormant is distinguished by an RNTI.

For example, in a case where the DCI format is scrambled using a C-RNTI or MCS-C-RNTI, the field is used to indicate the cell ID of an SCell to be dormant. In a case where the DCI format is scrambled using an ES-RNTI, the field is used to indicate a target cell ID.

### <Terminal Operation in Proposal 3>

Hereinafter, an exemplary terminal operation in <Proposal 3> will be described. The terminal deactivates and activates an SCell/PCell based on the value indicated from the base station.

For example, the terminal deactivates the SCell/PCell with the target cell ID indicated by the target cell ID indicator field described in the above <Proposal 3 - Option 1a - alt.1> and <Proposal 3 - Option 2a - alt.1>.

For example, the terminal deactivates all SCells depending on the value of the SCell deactivation indicator field described in the above <Proposal 3 - Option 1a - alt.2> and <Proposal 3 - Option 2a - alt.2>.

For example, the terminal deactivate the SCell/PCell with the target cell ID indicated by the existing field described in the above <Proposal 3 - Option 1b> and <Proposal 3 - Option 2b>.

### <Summary of Proposal 3>

As described above, the base station controls deactivation of SCell/PCell using a lower layer parameter such as DCI.

This operation allows the base station to reduce signaling overhead based on the RRC reconfiguration in the SCell/PCell deactivation control, thereby suppressing the delay associated with the switching. In addition, the processing road is reduced, and the base station can realize ES.

In addition, design changes in the base station and the terminal can be suppressed in a case where the existing field of DCI is used for the SCell/PCell deactivation control.

### <Proposal 4>

Proposal 4 describes a joint operation of the dynamic PCell switching described in Proposal 2 and the dynamic Cell deactivation described in Proposal 3.

The base station performs combined operation of the dynamic PCell switching of proposal 2 and the dynamic Cell deactivation of proposal 3. The base station may include an operation based on the dynamic PCell switching indication of Proposal 2 (Proposal 4 - Option 1) or an operation based on the dynamic Cell deactivation indication of Proposal 3 (Proposal 4 - Option 2).

### <Proposal 4 - Option 1>

In the joint operation of dynamic PCell switching and dynamic Cell deactivation, a target cell ID to be deactivated is implicitly indicated by a dynamic PCell switching indication. For example, in a case where a terminal receives a dynamic PCell switching indication, the terminal deactivates and/or releases (activates) a cell other than the target cell ID indicated by the dynamic PCell switching indication.

### <Proposal 4 - Option 1 - Example 1>

For example, in a case where the target cell ID "x" (x is a positive integer) is indicated in a target cell ID indicator field, the terminal deactivates cells with cell IDs other than "x".

After deactivation, the terminal assumes (overwrites) that the parameter associated with the parameter ServCellIndex "0" is associated with the parameter ServCellIndex "x."

Further, for example, in a case where the terminal receives a PCell switching indication in an NW ES indicator field, the terminal deactivates cells with cell IDs other than the parameter EsPCellIndex "x."

After deactivation, the terminal assumes (overwrites) that the parameter associated with the parameter ServCellIndex "0" is associated with the parameter EsPCellIndex "x".

### <Proposal 4 - Option 1 - Example 2>

For example, in a case where the target cell ID "x" is indicated in a target cell ID indicator field, the terminal assumes (overwrites) that the parameter associated with the parameter ServCellIndex "0" is associated with the parameter ServCellIndex "x."

After overwriting (rewriting) the parameter, the terminal deactivates the cell with the parameter ServCellIndex "x."

Further, for example, in a case where the terminal receives a PCell switching indication in an NW ES indicator field, the terminal assumes (overwrites) that the parameter associated with the parameter ServCellIndex "0" is associated with the parameter EsPCellIndex "x."

After overwriting (rewriting) the parameter, the terminal deactivates the cell with the parameter EsPCellIndex "x."

### <Proposal 4 - Option 2>

In the joint operation of dynamic PCell switching and dynamic Cell deactivation, the target cell ID targeted for switching to a PCell is implicitly indicated by a dynamic Cell deactivation indication. For example, in a case where a terminal receives a dynamic Cell deactivation indication, the terminal assumes that one of the remaining activation cells is a PCell. For example, the terminal assumes that one of the cells not deactivated by the dynamical Cell deactivation indication is a PCell.

For example, it is assumed that a PCell with cell ID "0" and SCells with cell IDs "1," "2," and "3" are configured for a terminal. In the dynamical Cell deactivation indication, for example, when the target cell IDs "0," "1," and "2" are indicated, the terminal assumes that the remaining cell ID "3" is a PCell.

The terminal may configure, as a PCell, the activation cell with the smallest cell ID (parameter ServCellIndex) among the remaining activation cells, for example. Further, the terminal may configure, as a PCell, the activation cell with the largest cell ID among the remaining activation cells, for example.

### <Summary of Proposal 4>

As described above, in the joint operation of dynamic PCell switching and dynamic Cell deactivation, a target cell ID to be deactivated is implicitly indicated by a dynamic PCell switching indication.

This operation allows the base station to reduce signaling overhead in PCell switching control and SCell/PCell deactivation control, and can suppress the delay associated with the PCell switching control and the SCell/PCell deactivation control. In addition, the processing road is reduced, and the base station can realize ES.

In addition, in the joint operation of dynamic PCell switching and dynamic Cell deactivation, a target cell ID targeted for switching to a PCell is implicitly indicated by a dynamic Cell deactivation indication.

This operation allows the base station to reduce signaling overhead in PCell switching control and SCell/PCell deactivation control, and can suppress the communication delay. In addition, the processing road is reduced, and the base station can realize ES.

### <Variation>

### - Variation 1

A PCell deactivation indicator field may be introduced in DCI for deactivation of PCell.

For example, a terminal deactivates a PCell in a case where a PCell deactivation indicator field is set to "1." For example, the terminal does not deactivate a PCell in a case where a PCell deactivation indicator field is set to "0."

In addition, a PCell deactivation indicator field may be introduced in group common DCI for deactivation of PCell.

For example, a plurality of terminals deactivates PCells in a case where a PCell deactivation indicator field is set to "1." For example, the terminals do not deactivate PCells in a case where a PCell deactivation indicator field is set to "0."

When the terminal deactivates the PCell, the terminal assumes that any of activation cells is a PCell. For example, the activation cell with the smallest cell ID (parameter ServCellIndex) among the remaining activation cells may be configured as a PCell. Further, the terminal may configure the activation cell with the largest cell ID among the remaining activation cells as a PCell, for example,

### - Variation 2

The dynamical PCell switching described above may be applied to PSCell switching. Dynamic Cell deactivation may be applied to deactivation of PSCell.

### - Variation 3

Proposals 2, 3, and 4 are not limited to the ES operation of the base station. For example, Proposals 2, 3, and 4 can be applied to operations other than the operation described in Proposal 1. For example, Proposals 2, 3, and 4 may be used to switch and/or deactivate a Cell based on the degradation of communication quality.

### - Variation 4

Which of the above Options and alts. are supported may depend on the configuration by RRC, MAC CE, the indication by DCI, or the terminal capability. The numbers of Options and alts. to be supported may each be one or more than one.

### <Terminal Capability>

The terminal may report the following terminal capabilities to the base station as UE capability:
- Whether dynamic PCell switching is supported
- Whether dynamic Cell deactivation is supported

### <Configuration of Base Station>

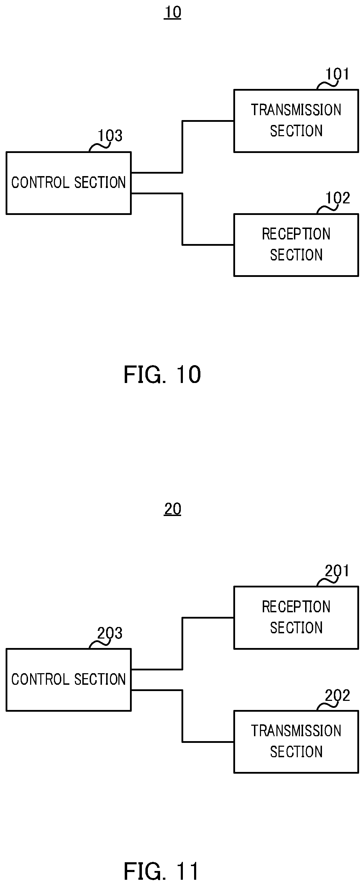

FIG. 10 is a block diagram illustrating an example of a configuration of base station 10 according to the embodiment. Base station 10 includes, for example, transmission section 101, reception section 102, and control section 103. Base station 10 communicates with terminal 20 (see FIG. 11) by radio.

Transmission section 101 transmits a downlink (DL) signal to terminal 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of terminal 20. Moreover, the DL signal may include higher layer control information (e.g., Radio Resource Control (RRC) control information). Furthermore, the DL signal may include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). Base station 10 transmits, to terminal 20, the control information using the PDCCH, and the downlink data signal using the PDSCH, for example.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a downlink data signal and is transmitted by using PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from terminal 20 and/or the data, control information, and/or the like acquired from the higher layer. Information on the allocated resource(s) may be included in control information to be transmitted to terminal 20.

Control section 103 configures a PUCCH resource, as an example of the resource to be used for transmitting and receiving a UL signal. Information on the PUCCH configuration such as a PUCCH cell timing pattern (PUCCH configuration information) may be indicated to terminal 20 by RRC.

Control section 103 determines a second cell to be switched to the first cell. Transmission section 101 transmits the information on the second cell using a (related) downlink control signal related to ES of the base station. Here, the downlink control signal is DCI, for example. The first cell is, for example, a cell that ensures connectivity between base station 10 and terminal 20 in carrier aggregation (CA). Alternatively, the first cell is, for example, a CC that ensures connection among a plurality of carriers used in CA. The first cell is, for example, a PCell. The second cell is, for example, in addition to the PCell, a cell that provides radio resources in CA. Alternatively, the second cell is a CC that is neither a PCell nor a PSCell among a plurality of carriers used in CA. The second cell is, for example, a SCell. This operation allows base station 10 to dynamically switch the second cell to the first cell without through the higher layer, so that the communication delay is suppressed. Further, the processing load of base station 10 is suppressed.

Control section 103 includes the cell index of the second cell to be switched to the first cell in a downlink control signal for ES. This operation allows base station 10 to dynamically switch the second cell to the first cell without through the higher layer, so that the communication delay is suppressed. Further, the processing load of base station 10 is suppressed.

Control section 103 also determines a second cell to be deactivated. Transmission section 101 transmits the information on the second cell determined by control section 103 using a downlink control signal related to ES of base station 10. This operation allows base station 10 to dynamically deactivate the second cell without through the higher layer, so that the communication delay is suppressed. Further, the processing load of base station 10 is suppressed.

Control section 103 includes the cell index of the second cell to be deactivated in the downlink control signal. This operation allows base station 10 to dynamically deactivate the second cell without through the higher layer, so that the communication delay is suppressed. Further, the processing load of base station 10 is suppressed.

### <Configuration of Terminal>

FIG. 11 is a block diagram illustrating one example of a configuration of terminal 20 according to the embodiment. Terminal 20 includes, for example, reception section 201, transmission section 202, and control section 203. Terminal 20 communicates with base station 10 by radio, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, terminal 20 receives control information from base station 10 using a PUCCH and transmits an uplink data signal using a PUSCH.

The reference signal included in the UL signal may include, for example, at least one of a DMRS, a PTRS, a CSI-RS, an SRS, and a PRS. For example, the reference signals such as DMRS and PTRS are used for demodulation of an uplink data signal and are transmitted using an uplink channel (e.g., PUSCH).

Control section 203 controls communication operations of terminal 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel. State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Reception section 201 receives a downlink control signal related to ES of base station 10. Control section 203 switches the second cell to the first cell based on the downlink control signal related to ES received by reception section 201. This operation allows terminal 20 to dynamically switch the second cell to the first cell without through the higher layer, and communication delay is suppressed. Further, the processing load of terminal 20 is suppressed.

Control section 203 switches the second cell to the first cell based on the cell index of the second cell to be switched to the first cell included in the downlink control signal. This operation allows terminal 20 to dynamically switch the second cell to the first cell without through the higher layer, so that the communication delay is suppressed. Further, the processing load of terminal 20 is suppressed.

Furthermore, reception section 201 receives a downlink control signal related to ES of base station 10. Control section 203 deactivates the second cell based on the downlink control signal related to ES of base station 10 received by reception section 201. This operation allows terminal 20 to dynamically deactivate the second cell without through the higher layer, so that the communication delay is suppressed. Further, the processing load of terminal 20 is suppressed.

Control section 203 deactivates the second cell based on the cell index of the second cell included in the downlink control signal. This operation allows terminal 20 to dynamically deactivate the second cell without through the higher layer, so that the communication delay is suppressed. Further, the processing load of terminal 20 is suppressed.

Furthermore, reception section 201 receives a downlink control signal related to ES of base station 10. When reception section 201 receives a downlink control signal indicating switching of the second cell to the first cell, control section 203 deactivates a second cell other than the second cell to which switching is indicated. This operation allows terminal 20 to dynamically switch the second cell to the first cell and deactivate the second cells without through the higher layer, so that the communication delay is suppressed. Further, the processing load of terminal 20 is suppressed.

Control section 203 deactivates the second cell with a cell index other than the cell index indicated by the downlink control signal. This operation allows terminal 20 to dynamically switch the second cell to the first cell and deactivate the second cell without through the higher layer, so that the communication delay is suppressed. Further, the processing load of terminal 20 is suppressed.

Furthermore, reception section 201 receives a downlink control signal related to ES of base station 10. When reception section 201 receives a downlink control signal indicating deactivation of the second cell, control section 203 determines a second cell to be switched to the first cell from the secondary cells other than the second cell to be deactivated. This operation allows terminal 20 to dynamically switch the second cell to the first cell and deactivate the second cell without through the higher layer, so that the communication delay is suppressed. Further, the processing load of terminal 20 is suppressed.

Control section 203 switches the second cell with the smallest cell index or the largest cell index among the second cells other than the second cell to be deactivated to the primary cell. This operation allows terminal 20 to dynamically switch the second cell to the first cell and to deactivate the second cell without through the higher layer, so that the communication delay is suppressed. Further, the processing load of terminal 20 is suppressed.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

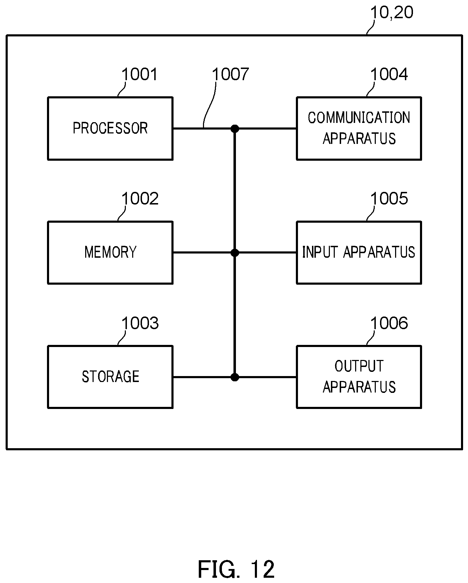

For example, a base station, a terminal, and so on according to one embodiment of the present disclosure may function as a computer that executes the processes of the radio communication method of the present disclosure. FIG. 12 is a diagram to show an example of a hardware structure of base station 10 and terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described controller 103 or controller 203, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control unit 203 of terminal 20 may be implemented by control programs that are stored in the memory 1002 and that operate on the processor 1001, and other functional blocks may be implemented likewise. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, the reception section 102, the reception section 201, transmission section 202, and the like, may be realized by the communication device 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, the base station 10 may have the functions of the terminal 20 described above.

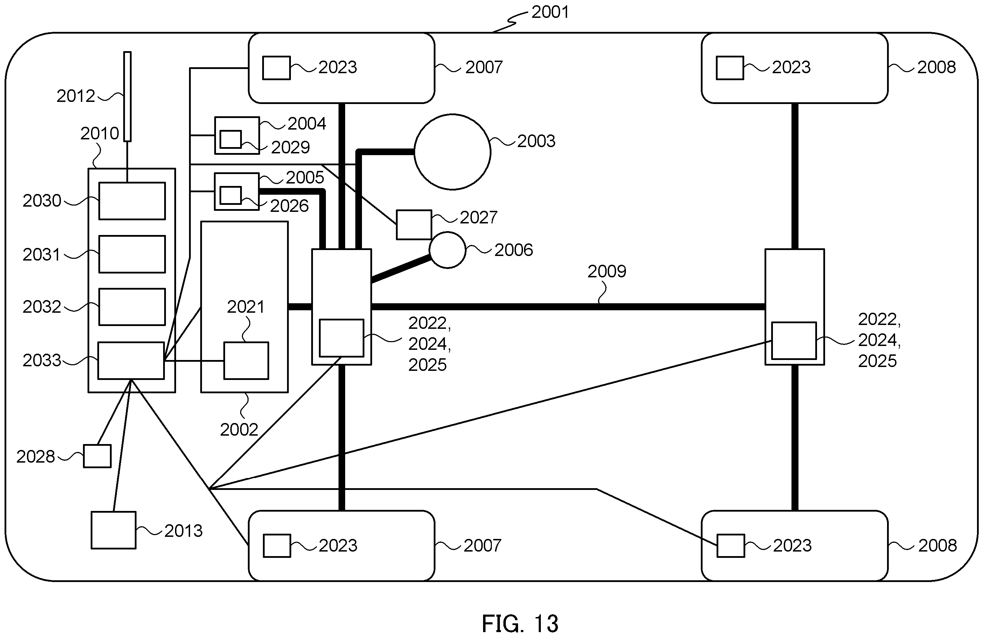

FIG. 13 shows an example of a configuration of a vehicle 2001. As shown in FIG. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 12 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010, information obtained based on the signals, and information based on an input from the outside (a user) obtained via the information service unit 2012, to the external apparatus via radio communication. The electronic control unit 2010, the various sensors 2021 to 2029, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029 etc., mounted in the vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of') as used in the present disclosure does not mean "based only on" (or "only on the basis of"), unless otherwise specified. In other words, the phrase "based on" (or "on the basis of") means both "based only on" and "based at least on" ("only on the basis of' and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts", "circuits", "devices", etc.

### <Open Form>

In the case where the terms "include", "including" and variations thereof are used in the present disclosure, these terms are intended to be comprehensive in the same way as the term "comprising". Further, the term "or" used in the present specification is not intended to be an "exclusive or".

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "subslot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. APRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a", "an", and "the", the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Terminal
101, 202 Transmission section
102, 201 Reception section
103, 203 Control section

## Claims

1. A terminal, comprising:
a reception section that receives a downlink control signal related to energy savings of a base station; and
a control section that switches a secondary cell to a primary cell based on the downlink control signal.

2. The terminal according to claim 1, wherein
the control section switches the secondary cell to the primary cell based on a cell index of the secondary cell to be switched to the primary cell, the cell index being included in the downlink control signal.

3. A base station, comprising:
a control section that determines a secondary cell to be switched to a primary cell; and
a transmission section that transmits information on the secondary cell using a downlink control signal related to energy savings of a base station.

4. The base station according to claim 3, wherein
the control section includes, in the downlink control signal, a cell index of the secondary cell to be switched to the primary cell.

5. A communication method, comprising:
receiving, by a terminal, a downlink control signal related to energy savings of a base station; and
switching, by the terminal, a secondary cell to a primary cell based on the downlink control signal.

6. A communication method, comprising:
determining, by a base station, a secondary cell to be switched to a primary cell; and
transmitting, by the base station, information on the secondary cell using a downlink control signal related to energy savings of a base station.
